# EUROPÄISCHE PATENTSCHRIFT

(11) **EP 2 231 442 B1**
(45) Veröffentlichungstag und Bekanntmachung des Hinweises auf die Patenterteilung: **07.10.2015**
(21) Anmeldenummer: 08869256.1
(22) Anmeldetag: 13.12.2008
(51) Int. Cl.: B60R 9/04

(54) **TIEFZIEHKAPPE FÜR DACHRELING**
DEEP DRAW CAP FOR ROOF RACK
CACHE EMBOUTI POUR GALERIE DE TOIT

(30) Priorität: 11.01.2008 DE 102008004967
(43) Veröffentlichungstag der Anmeldung: 29.09.2010
(73) Patentinhaber: Hans und Ottmar Binder GmbH Oberflächenveredelung, 89558 Böhmenkirch (DE)
(72) Erfinder: NEU, Reinhard, 42651 Solingen (DE); KOCH, Kurt, 66287 Quierschied (DE)
(74) Vertreter: Grosse, Rainer
(86) Internationale Anmeldenummer: PCT/EP2008/010623
(87) Internationale Veröffentlichungsnummer: WO 2009/086881

(56) Entgegenhaltungen:
- EP-A- 0 805 068
- EP-A- 1 348 597
- EP-A- 1 953 041
- EP-A- 1 953 042
- WO-A-03/033305
- DE-A1- 19 534 044

## Beschreibung

Die Erfindung betrifft eine Dachreling für Fahrzeuge gemäß Oberbegriff des Anspruchs 1. Eine derartige Dachreling bestehend aus vorzugsweise zwei, in einem Abstand und im Wesentlichen parallel zur Dachfläche angeordneten längs der seitlichen Dachrahmen erstreckenden, insbesondere rohrförmigen Längsholmen und aus die Längsholme tragenden, sich jeweils auf dem Dach oder in darin ausgebildeten Kanälen abstützenden Stützfüßen.

Derartige Dachrelings sind in diversen Patentschriften beschrieben. Wie sich aus diesen Druckschriften ergibt, besteht eine Dachreling üblicherweise aus mindestens einem rohrförmigen (profiliertem) Längsholm - Relingstab - an jeder Dachseite und zwei oder mehreren, jeweils einen rohrförmigen Längsholm tragenden Stützfüßen. Zur Montage werden der Längsholm und die Stützfüße an den Enden des Längsholmes zusammengesteckt. Die Stützfüße werden mit Gewindebolzen, Schrauben oder ähnlichem bestückt, deren überstehenden Enden durch Bohrungen im Dachblech hindurchgeführt werden. Auf die Gewindebolzen werden von der anderen Seite des Dachbleches Muttern aufgebracht.

Die Längsholme bestehen in der Regel aus Aluminiumrohren, können aber auch aus Stahlrohren gefertigt sein und sind entsprechend der Dachkontur in zwei oder drei Ebenen gebogen. Die Stützüße werden separat als Kunststoffspritzteile oder Metallgussteile in einigen Fällen auch als Schmiedeteile hergestellt.

Hinsichtlich der Oberflächen müssen die Bauteile aufeinander in Farbe und Glanzgrad abgestimmt werden. Dies kann durch eine Lackierung, Pulverbeschichtung, Verchromen oder Eloxieren geschehen. Bei höherwertigen Fahrzeugen werden sehr häufig hochdekorative Oberfächen gefordert wie sie durch das Verchromen und Eloxieren erzeugt werden.

Diese metallisch hochdekorativen Oberflächen sind jedoch nicht mit jedem Werkstoff zu erzielen. So lassen sich Stützfüße aus Kunststoff nur lackieren und verchromen, Stützfüße aus Metallguss pulverbeschichten, lackieren und verchromen. Eine Anpassung dieser Bauteile an eloxierte Oberflächen von Längsholmen aus Aluminium ist nicht möglich.

Weiterhin ungünstig ist bei den vorbeschriebenen Dachrelings, dass diese grundsätzlich nur von der Innenseite des Dachbleches her am Dach festgeschraubt werden können, was nicht immer bei allen Fahrzeugtypen möglich oder erwünscht ist.

Aus der gattungsbildenden EP 1 348 597 A geht ein Dachträgersystem für ein Kraftfahrzeug hervor. Diese Literaturstelle betrifft eine Dachreling mit mindestens einem Längsholm, der mit mindestens einem separaten Stützfuß verbunden ist, der einen mit Befestigungselementen versehenen Grundkörper aufweist, der von einer Sichtabdeckung abgedeckt ist, die die Befestigungselemente mit abdeckt. Ferner weist die bekannte Konstruktion einen zwischen Grundkörper und Sichtabdeckung angeordneten Befestigungseinsatz zum Halten der Sichtabdeckung am Grundkörper auf.

Der Erfindung liegt daher die Aufgabe zu Grunde, eine Dachreling für Fahrzeuge mit einem von Stützen getragenem Längsholm vorzuschlagen, die sich von außen, aber auch von innen bei vorher montierten Befestigungsbolzen(-Schrauben), auf einem Fahrzeugdach montieren lässt und deren Längsholme und Stützfüße ein einheitliches Erscheinungsbild hinsichtlich einer hochdekorativen Oberfläche und deren Aussehen gewährleisten. Speziell bei eloxierten Oberflächen.

Ausgehend von dieser Aufgabenstellung wird eine Dachreling für Fahrzeuge der eingangs erwähnten Art vorgeschlagen, bei der an die Sichtabdeckung der Befestigungseinsatz angespritzt ist. Die Dachreling ist auf einem Dach von außen oder innen verschraubbar. Wobei die in den Längsholmen über Zapfen eingesteckten Stützfüße nach der Montage auf dem Fahrzeug, bei einer Montage von außen, durch eine Kappe, die im Tiefziehverfahren aus einem Aluminiumblech hergestellt ist, abgedeckt wird. Bei von der Dachinnenseite zu montierenden Dachrelings wird die Kappe zuvor montiert.

Um die Aluminiumkappe mit dem Grundkörper, der Stütze, verbinden zu können, ist in der Aluminiumkappe ein Kunststoffeinsatz eingebracht, an dem entsprechende Klipse und Führungen angebracht sind, die in die entsprechenden Aufnahmen an der Stütze geführt und/oder geklipst werden, um einen sicheren Halt der Kappe am Grundkörper zu garantieren.

Die Aluminiumkappen werden nach der Fertigstellung in ein Kunststoffspritzwerkzeug eingelegt und der zuvor beschriebene Kunststoffeinsatz eingespritzt. Hierzu müssen die Kappen zuvor mit entsprechenden Haftvermittlern oder Ähnlichem behandelt werden.

Eine weitere Möglichkeit ist das Hinterspritzen einer eloxierten Aluminiumfolie mit einem Kunststoff, wobei der hinterspritzte Kunststoff dem zuvor beschriebenen Kunststoffeinsatz hinsichtlich seiner Funktionen, Klipse, Führungen etc. entspricht. Die Aluminiumfolie wird zuvor in einem Prägevorgang in die entsprechende Form geprägt, in ein Kunststoffspritzwerkzeug eingelegt und hinterspritzt.

Der Vorteil der beiden zuletzt genannten Möglichkeiten, Einspritzen des Kunststoffeinsatzes und Hinterspritzen einer Folie mit dem Kunststoffträger, ist, dass ein Verkleben der beiden Bauteile als zusätzlicher Arbeitsgang entfällt. Nach der Entnahme der Kappe aus dem Spritzwerkzeug ist in beiden Fällen das Bauteil Kappe fertiggestellt.

Da die Längsholme und die Kappen aus dem gleichen Aluminiummaterial bestehen, lassen sich deren Oberflächen in gleicher Weise behandeln und ergeben eine einheitliche Oberflächenqualität und ein einheitliches Oberflächenaussehen, insbesondere bei zu eloxierenden Teilen.

Die Stützen - Grundkörper - die mit den Zapfen in die Längsholme eingesteckt vormontiert sind, werden von außen auf dem Dach des Fahrzeuges verschraubt, wonach auf jeder Stütze die vorbeschriebene Aluminiumkappe aufgeklipst wird. Bei einer Montage am Fahrzeug von innen kann die Kappe ebenfalls bereits an den Stützen vormontiert sein.

Die Stützen für eine solche Reling können als Kunststoffspritzteile oder als Metallgussteile hergestellt sein. An diesen Stützen sind die entsprechenden Aufnahmen zum Klipsen der Kappe eingebracht. Aus Gründen der Gewichtsersparnis können die Stütze und der Kunststoffeinsatz in Skelettbauweise ausgeführt sein. Die Klipse und Führungen an der Kappe und der Stütze sind so ausgelegt, dass ein klapperfreier und fester Sitz der Kappen an den Füßen möglich ist.

Die Erfindung wird nachstehend anhand der Figuren näher erläutert.
Fig. 1 zeigt eine perspektivische Darstellung der Abdeckkappe aus Aluminium,
Fig. 2 eine perspektivische Darstellung des nicht erfindungsgemäßen Kunststoffeinsatzes,
Fig. 3 eine perspektivische Darstellung der Stütze (Grundkörper).

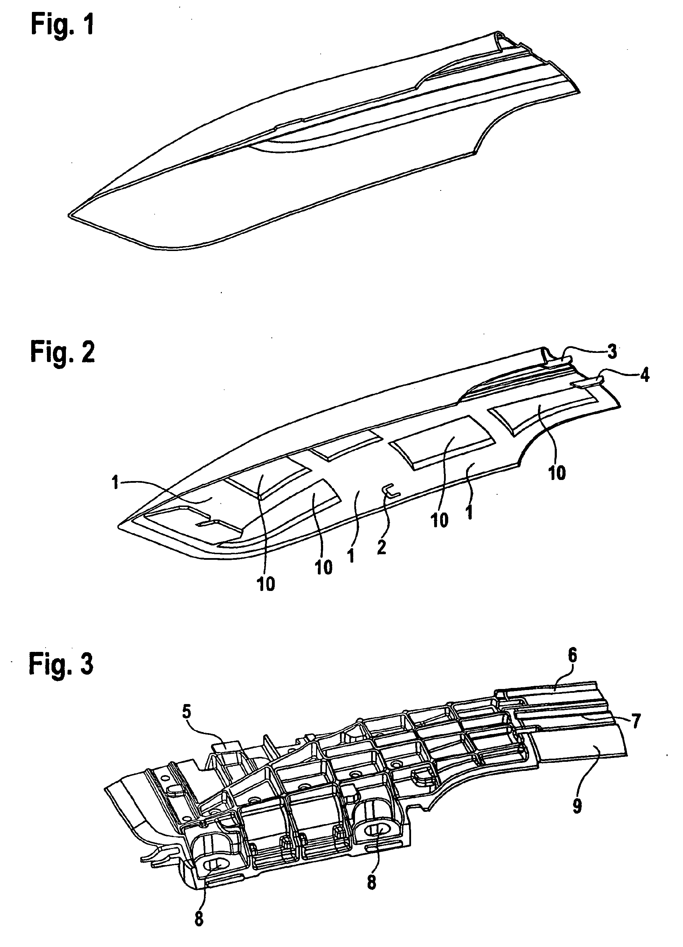

Aus der Darstellung in Fig. 1 ist die Aluminiumtiefziehkappe erkennbar, die als Zusammenbaukappe ausgeführt sein kann. Bei einer nicht erfindungsgemäßen Ausgestaltung wird die Kappe mit dem Kunststoffeinsatz Fig. 2 über die beschriebenen Klebeflächen 1 verklebt.

Aus der Darstellung in Fig. 2 ist der Kunststoffeinsatz erkennbar. An dem Kunststoffeinsatz Fig. 2 sind die für eine spätere Montage der Zusammenbaukappe, gefügt durch Verkleben der Fig.1 und Fig.2, notwendigen Klipse 2 und Führungen 3 und 4 zu erkennen, die zur Montage der Zusammenbaukappe auf dem Stützfuß Fig. 3 notwendig sind. Die Klipse und Führungen können je nach Form der Bauteile unterschiedlich ausgeführt sein. Der Kunststoffeinsatz Fig. 2 kann zur Gewichtreduzierung in einer Skelettform - Fachwerkstruktur ausgeführt sein, hierzu sind offene Fenster 10 im Bauteil ausgeführt.

Aus der Darstellung Fig.3 ist der Stützfuß erkennbar. An dem Stützfuß Fig.3 sind die Aufnahmen 5 für die Klipse 2 und die Aufnahmen 6 und 7 für die Führungen 3 und 4 des Kunststoffeinsatzes Fig. 2 erkennbar. Durch Aufschieben und/oder Aufklipsen der Zusammenbaukappe über die Klipse und Führungen wird der Stützfuß Fig. 3 später, nach der Montage der Reling am Fahrzeug abgedeckt, so dass eine Einheit Stützfuß gebildet wird, bei dem keine Schrauben oder Befestigungsbolzen von außen sichtbar sind.

Die komplette Reling, gebildet aus mindestens zwei Stützen, Stütze vorn und Stütze hinten und ein die Stützen verbindender Relingstab, aus einem Hohlprofil, wird zuvor auf dem Fahrzeugdach von außen über die Löcher 8 im Stützfuß an das Fahrzeugdach geschraubt. Die Verbindung der Stützen mit dem Relingstab erfolgt zuvor über die Zapfen 9 der Stütze Fig. 3. Nachdem die Reling auf dem Fahrzeugdach geschraubt ist, wird die Zusammenbaukappe wie zuvor beschrieben auf die Stützfüße Fig. 3 geklipst, die Führungen 3 und 4 des Kunststoffeinsatzes Fig. 2 werden hierbei in die Führungen 6 und 7 des Zapfens eingeschoben und werden durch den Relingstab gehalten, so dass die Zusammenbaukappe hier dauerhaft befestigt ist. Die Führungen 3 und 4 sind so gefertigt, dass sie immer unter einer Vorspannung im Relingprofil gehalten werden, um ein Klappern und Lösen der Kappe zu verhindern.

Bei einer Relingmontage am Fahrzeug mittels Verschraubung der Reling von der Dachinnenseite sind die Stützfüße Fig. 3, die zuvor mit dem Relingstab zu einer Reling verbunden wurden, auch bereits mit Schrauben oder Befestigungsbolzen in den Stützen Fig. 3 versehen. Die Zusammenbaukappe ist ebenfalls auf der Stütze vormontiert, wobei ebenfalls die Schrauben oder Befestigungsbolzen durch die Kappe abgedeckt sind. Die Reling wird dann ohne weitere zusätzliche Arbeitsschritte am Fahrzeug von innen angeschraubt.

Wie bereits beschrieben wird bei der nicht erfindungsgemäßen Ausführung die Aluminiumkappe Fig. 1 mit dem Kunststoffeinsatz Fig. 2 zu einer Einheit verklebt.

Beim erfindungsgemäßen Einspritzen des Kunststoffträgers Fig. 2 in ein Aluminium Tiefziehteil Fig. 1 entfällt der Arbeitsschritt Verkleben, die Bauteile bilden nach der Entnahme aus dem Werkzeug eine Einheit. Gleiches gilt für das Hinterspritzen einer Aluminiumfolie ähnlich Fig. 1 mit dem Kunststoffträgerteil Fig. 2.

Als Befestigungselemente werden bevorzugt Durchbrüche für Befestigungsschrauben/Befestigungsbolzen eingesetzt. Zusätzlich oder alternativ sind als Befestigungselemente auch Gewindebohrungen für Befestigungsschrauben denkbar. Die Sichtabdeckung ist vorzugsweise als Kappe (Fig. 1), insbesondere Aluminiumtiefziehkappe oder Zusammenbaukappe, ausgeführt. Als Befestigungseinsatz kann ein Kunststoffeinsatz (Fig. 2) verwendet werden. Als Klipselemente, sofern vorhanden, werden Klipse 2 verwendet.

## Patentansprüche

1. Dachreling für ein Fahrzeug, mit mindestens einem Längsholm, der mit mindestens einem separaten Stützfuß verbunden ist, der einen mit Befestigungselementen versehenen Grundkörper aufweist, der von einer Sichtabdeckung abgedeckt ist, die die Befestigungselemente mit abdeckt, und mit einem zwischen Grundkörper und Sichtabdeckung angeordneten Befestigungseinsatz zum Halten der Sichtabdeckung an dem Grundkörper, **dadurch gekennzeichnet, dass** an die Sichtabdeckung der Befestigungseinsatz angespritzt ist.

2. Dachreling nach Anspruch 1, **dadurch gekennzeichnet, dass** die Sichtabdeckung aus Aluminium oder Aluminiumlegierung besteht.

3. Dachreling nach einem der vorhergehenden Ansprüche, **dadurch gekennzeichnet, dass** der Längsholm aus Aluminium oder Aluminiumlegierung besteht.

4. Dachreling nach einem der vorhergehenden Ansprüche, **dadurch gekennzeichnet, dass** die Sichtabdeckung eine Kappenform aufweist.

5. Dachreling nach einem der vorhergehenden Ansprüche, **dadurch gekennzeichnet, dass** die Sichtabdeckung ein Tiefziehteil ist.

6. Dachreling nach einem der vorhergehenden Ansprüche, **dadurch gekennzeichnet, dass** der Befestigungseinsatz ein Kunststoffteil ist.

7. Dachreling nach einem der vorhergehenden Ansprüche, **dadurch gekennzeichnet, dass** der Befestigungseinsatz Klipselemente zum Verklipsen mit dem Grundkörper aufweist.

8. Dachreling nach einem der vorhergehenden Ansprüche, **dadurch gekennzeichnet, dass** der Befestigungseinsatz mit dem Grundkörper verklebt ist.

9. Dachreling nach einem der vorhergehenden Ansprüche, **dadurch gekennzeichnet, dass** die Sichtabdeckung mit dem Grundkörper verklebt ist.

10. Dachreling nach einem der vorhergehenden Ansprüche, **dadurch gekennzeichnet, dass** die Sichtabdeckung von einer Aluminiumfolie, einer Aluminiumlegierungsfolie, einem Aluminiumblech oder einem Aluminiumlegierungsblech gebildet ist.

11. Dachreling nach einem der vorhergehenden Ansprüche, **dadurch gekennzeichnet, dass** der Befestigungseinsatz ein insbesondere mechanisch versteifendes Tragteil für die Sichtabdeckung bildet.

## Claims

1. Roof rails for a vehicle, with at least one longitudinal beam that is connected with at least one separate support foot, which support foot has a base body provided with attachment elements, which base body is covered by a visual cover that also covers the attachment elements, and with an attachment insert disposed between base body and visual cover, for holding the visual cover on the base body, **characterized in that** the attachment insert is injection-moulded onto the visual cover.

2. Roof rails according to claim 1, **characterized in that** the visual cover consists of aluminium or an aluminium alloy.

3. Roof rails according to one of the preceding claims, **characterized in that** the longitudinal beam consists of aluminium or an aluminium alloy.

4. Roof rails according to one of the preceding claims, **characterized in that** the visual cover has a cap shape.

5. Roof rails according to one of the preceding claims, **characterized in that** the visual cover is a deep-drawn part.

6. Roof rails according to one of the preceding claims, **characterized in that** the attachment insert is a plastic part.

7. Roof rails according to one of the preceding claims, **characterized in that** the attachment insert has clip elements for a clip connection with the base body.

8. Roof rails according to one of the preceding claims, **characterized in that** the attachment insert is glued to the base body.

9. Roof rails according to one of the preceding claims, **characterized in that** the visual cover is glued to the base body.

10. Roof rails according to one of the preceding claims, **characterized in that** the visual cover is formed by an aluminium foil, an aluminium alloy foil, an aluminium sheet, or an aluminium alloy sheet.

11. Roof rails according to one of the preceding claims, **characterized in that** the attachment insert forms a support part, particularly a mechanically reinforcing part, for the visual cover.

## Revendications

1. Galerie de toit pour un véhicule, avec au moins un longeron relié avec au moins un pied d'appui séparé qui comprend un corps de base muni des éléments de fixation, le corps de base étant caché par un élément de cache aussi cachant les éléments de fixation, et avec un insert de fixation interposé entre le corps de base et l'élément de cache pour retenir l'élément de cache sur le corps de base, **caractérisée en ce que** l'insert de fixation est déposé par projection sur l'élément de cache.

2. Galerie de toit selon la revendication 1, **caractérisée en ce que** l'élément de cache est constitué d'aluminium ou d'un alliage d'aluminium.

3. Galerie de toit selon l'une quelconque des revendications précédentes, **caractérisée en ce que** le longeron est constitué d'aluminium ou d'un alliage d'aluminium.

4. Galerie de toit selon l'une quelconque des revendications précédentes, **caractérisée en ce que** l'élément de cache présente une forme de capuchon.

5. Galerie de toit selon l'une quelconque des revendications précédentes, **caractérisée en ce que** l'élément de cache est une pièce emboutie.

6. Galerie de toit selon l'une quelconque des revendications précédentes, **caractérisée en ce que** l'insert de fixation est une pièce en plastique.

7. Galerie de toit selon l'une quelconque des revendications précédentes, **caractérisée en ce que** l'insert de fixation présente des éléments d'encliquetage pour l'encliqueter avec le corps de base.

8. Galerie de toit selon l'une quelconque des revendications précédentes, **caractérisée en ce que** l'insert de fixation est collé au corps de base.

9. Galerie de toit selon l'une quelconque des revendications précédentes, **caractérisée en ce que** l'élément de cache est collé au corps de base.

10. Galerie de toit selon l'une quelconque des revendications précédentes, **caractérisée en ce que** l'élément de cache est formé par une feuille d'aluminium, une feuille d'un alliage d'aluminium, une tôle d'aluminium ou une tôle d'un alliage d'aluminium.

11. Galerie de toit selon l'une quelconque des revendications précédentes, **caractérisée en ce que** l'insert de fixation forme une pièce de support pour l'élément de cache, notamment avec un effet mécaniquement renforçant.
